# EUROPEAN PATENT SPECIFICATION

(11) **EP 3 130 510 B1**
(45) Date of publication and mention of the grant of the patent: **21.03.2018**
(21) Application number: 15740082.1
(22) Date of filing: 16.01.2015
(51) Int. Cl.: B60R 11/02, B60R 1/00, B60R 1/04, B60R 1/10, B60R 1/12, B60R 11/00

(54) **AUTOMOBILE ROOM MIRROR ADAPTER**
ADAPTER FÜR AUTOMOBILINNENRAUMSPIEGEL
ADAPTATEUR POUR RÉTROVISEUR D'HABITACLE D'AUTOMOBILE

(30) Priority: 21.01.2014 JP 2014008403
(43) Date of publication of application: 15.02.2017
(73) Proprietor: Nisshinbo Holdings Inc., Tokyo 103-8650 (JP)
(72) Inventor: ISHIZAKA, Akihiro, Tokyo 103-8650 (JP); FUJIKI, Norio, Tokyo 103-8650 (JP); HOTTA, Takahiro, Tokyo 103-8650 (JP)
(74) Representative: Isarpatent
(86) International application number: PCT/JP2015/051059
(87) International publication number: WO 2015/111514

(56) References cited:
- JP-A- S 632 753
- JP-A- 2012 112 973
- JP-A- 2012 214 087
- JP-A- 2014 229 049
- JP-U- 3 170 691
- US-A1- 2004 057 131
- US-A1- 2006 164 230
- US-B1- 6 545 598

## Description

### TECHNICAL FIELD

The present invention relates to an adapter for mounting a display function-equipped electronic device on a rearview mirror of a vehicle such as an automobile.

### BACKGROUND ART

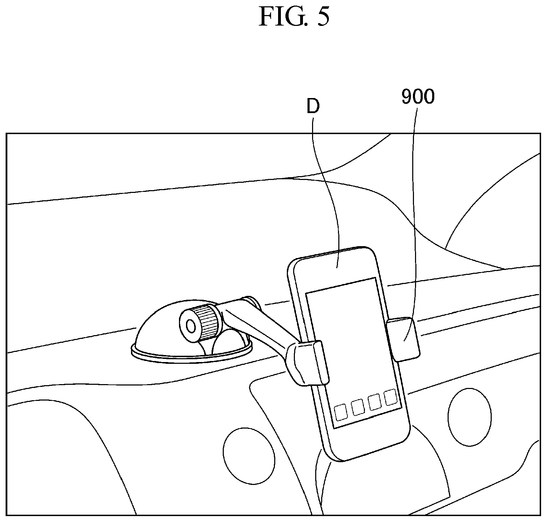

Recently, smart phones have been popularized, and navigation systems and various types of guidance using the smart phones can be used in an automobile. A typical vehicle instrument panel is not configured for post-installation of a smart phone. Accordingly, as illustrated in FIG. 5, it is configured such that an adapter 900 is mounted on an instrument panel and a display function-equipped electronic device D such as a smart phone etc. is mounted on the adapter. US 2006/164230 discloses a mount adapter to be mounted on a vehicular rear-view mirror and a display function equipped electronic device which is mounted on the rear-view mirror on a side near the driver's seat.

With this kind of method, there are problems that if the operation of the display function-equipped electronic device D is obstructed by the steering wheel, the distance to the operating side of the display function-equipped electronic device is far, thereby making it difficult to operate, and the display function-equipped electronic device D moves when it is being operated, thereby not allowing easy operation thereof.

Moreover, with this kind of method, there is a problem that visibility is poor since not only the distance from the eye point of the driver to the display function-equipped electronic device is 80 to 90 cm and also the display of the typical display function-equipped electronic device is small.

### DISCLOSURE OF INVENTION

### PROBLEM TO BE SOLVED BY THE INVENTION

The present invention aims to provide a mount adapter for mounting a display function-equipped electronic device in a vehicle wherein the adapter provides a driver with improved visibility and operability.

### SOLUTION TO THE PROBLEM

A mount adapter of a first invention in order to reach the above aim is characterized by a mount adapter to be mounted on a vehicular rearview mirror. A convex mirror is provided on the far side of a rearview mirror to a driver's seat side when viewed from the driver's seat. A display function-equipped electronic device is mounted on the rearview mirror on the side near the driver's seat in such a manner as to cover the rearview mirror.

The following results are possible according to the mount adapter of the first invention.

With the present invention, a display function-equipped electronic device is mounted on the rear-view mirror using a mount adapter. Since the display function-equipped electronic device is deployed within a driver's operating range, the display function-equipped electronic device can be operated very easily without interfering with the driver's operation.

The positional relationship between the rearview mirror and the windshield cannot be changed as there is little shift of the rearview mirror due to vehicle vibration or operation of a display function-equipped electronic device even if a display function-equipped electronic device weighing approximately 100g is mounted thereon. In addition, the display function-equipped electronic device is easily operated. Moreover, the design of the vehicle interior is greatly improved more than with the conventional mounting method (see FIG. 5), and an attractive appearance of the vehicle interior is possible.

Furthermore, the area of the rearview mirror is reduced to approximately half due to the display function-equipped electronic device; however, a convex mirror is mounted on the remaining area, and thereby the driver can view the entire backside.

A mount adapter of a second invention is characterized in that a mount part is provided in a manner that the flat part of the display function-equipped electronic device according to the first invention is nearly perpendicular to the traveling direction of the vehicle.

According to the mount adapter of the second invention, the display function-equipped electronic device can be pointed perpendicular to the traveling direction of the vehicle. Therefore, a camera mounted on the display function-equipped electronic device can be pointed in the travelling direction of the vehicle. This makes it possible to photograph the scene in front of the vehicle, and thereby making it easy to photograph the scene in front of the vehicle by the camera and confirm the photographed image. Moreover, there is an advantage that headlights of a following vehicle at night will not reflect on the screen of the display function-equipped electronic device.

A mount adapter of a third invention is characterized in that the mount adapter is deployed in a manner that a mechanical operation button and/or a touch operation portion of the display function-equipped electronic device according to either the first invention or the second invention is on the central side of the rearview mirror.

According to the mount adapter of the third invention, by bringing a mechanical SW or a touch operation portion (touch SW) of the display function-equipped electronic device close to the rearview mirror, shift of the display function-equipped electronic device or shift of the rearview mirror when this SW is operated can be reduced. Therefore, the driver can stabilize and operate the display function-equipped electronic device, and reduce operational errors. The display function-equipped electronic device can be mounted at a position of 45 to 50 cm from the driver's eye point. This makes even a display function-equipped electronic device with an approximately 5-inch screen be easily seen. The distance from eye point to a 7-inch navigation display device attached to the center console is approximately 80 cm, and the angle of visibility to both displays is nearly the same as that to the 5-inch display device attached on the rearview mirror, according to the present invention.

A mount adapter of a fourth invention is characterized in that the display function-equipped electronic device of the first invention has the convex mirror and the mount adapter unified as a single body.

The same results as with the first invention are possible according to the mount adapter of the fourth invention.

A mount adapter of a fifth invention is characterized in that a mount part is provided in a manner that a flat part of the display function-equipped electronic device according to the fourth invention is nearly perpendicular to the traveling direction of the vehicle.

The same results as with the second invention are possible according to the mount adapter of the fifth invention.

A mount adapter of a sixth invention is characterized in that the mount adapter is deployed in a manner that a mechanical operation button and/or a touch operation portion of the display function-equipped electronic device according to either the fourth invention or the fifth invention is on the central side of the rearview mirror.

The same results as with the third invention are possible according to the mount adapter of the sixth invention.

A method of mounting a display function-equipped electronic device of a seventh invention is characterized in that a display function-equipped electronic device using the mount adapter of any one of the first invention to the sixth invention is mounted on a vehicular rearview mirror.

The same results as with the first invention are possible according to the mount adapter of the seventh invention.

### BRIEF DESCRIPTION OF DRAWINGS

FIG. 1 is a schematic diagram illustrating a state where a display function-equipped electronic device is mounted on a rearview mirror using a mount adapter of the present invention;
FIG. 2 is a schematic diagram illustrating a method of mounting a display function-equipped electronic device using a mount adapter of the present invention;
FIG. 3 is a schematic diagram of a First Embodiment of a mount adapter of the present invention;
FIG. 4 is a schematic diagram of a Second Embodiment of a mount adapter of the present invention; and
FIG. 5 is a schematic diagram illustrating a conventional method of mounting the display function-equipped electronic device in a vehicle.

### DESCRIPTION OF EMBODIMENTS

A mount adapter for a display function-equipped electronic device according to embodiments and a method for use of said adapter are described below with reference to accompanying drawings.

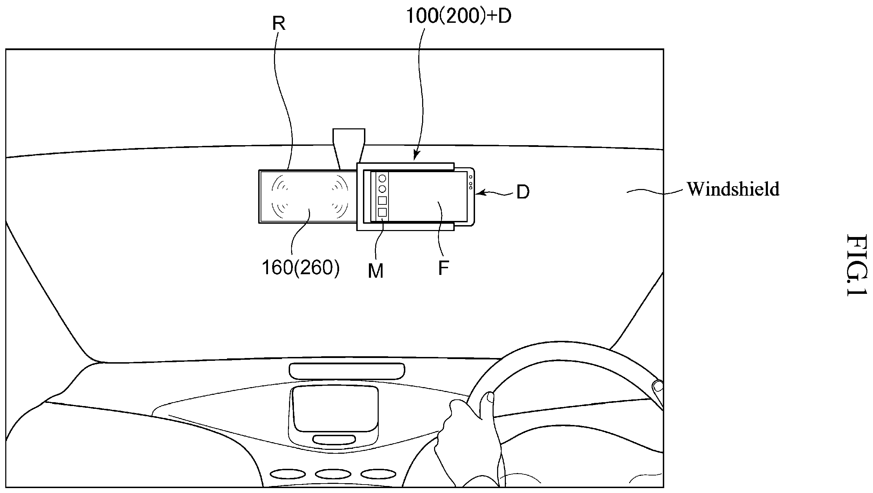

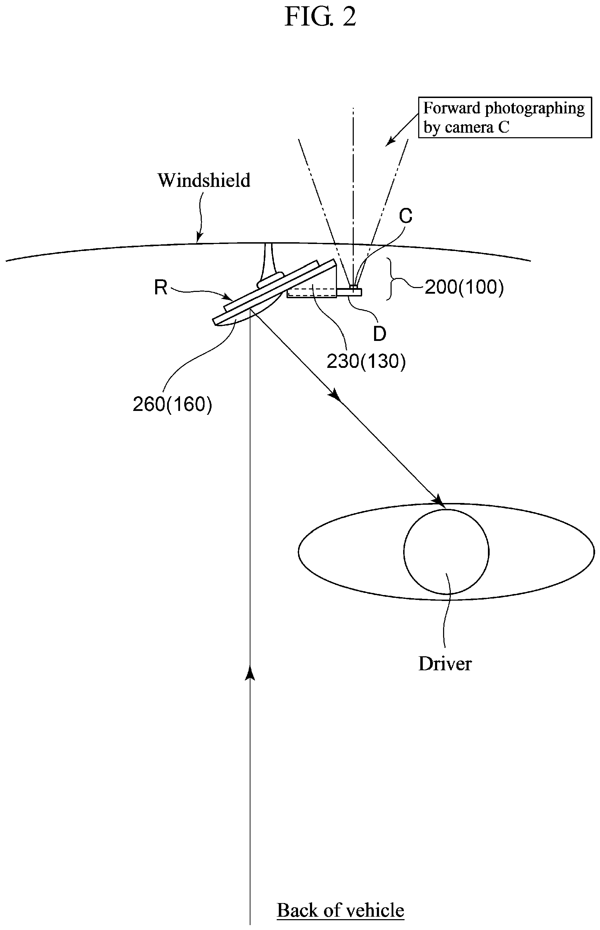

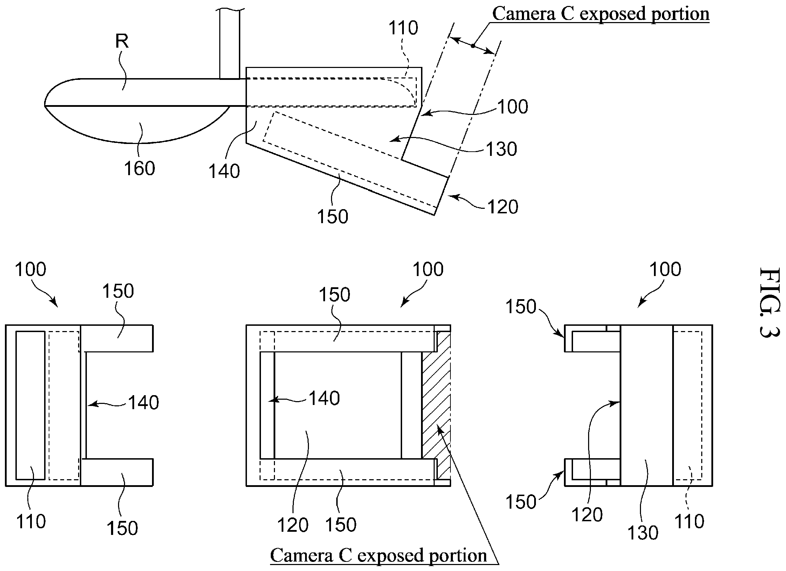

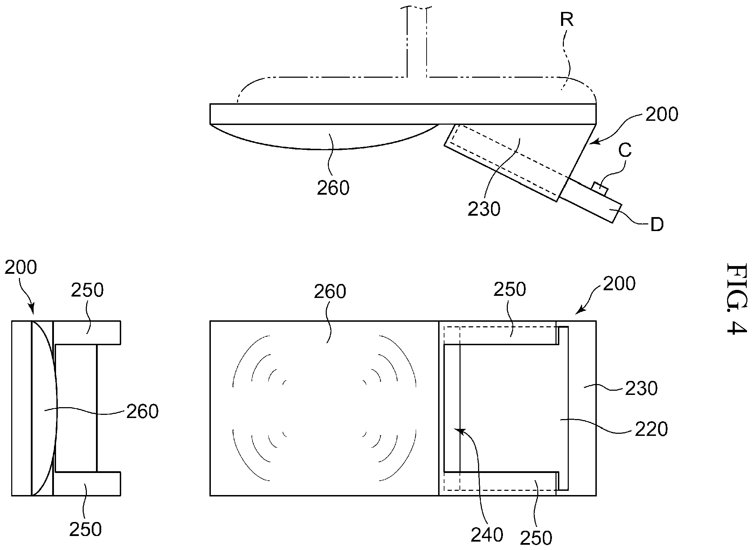

FIG. 1 is a schematic diagram illustrating a state where a display function-equipped electronic device is mounted on a rearview mirror using a mount adapter of the present invention. FIG. 2 is a schematic diagram illustrating a method of mounting a display function-equipped electronic device D using a mount adapter 100 of the present invention. FIG. 3 is a schematic diagram of the mount adapter 100 of a First Embodiment of the present invention. FIG. 4 is a schematic diagram of a mount adapter 200 of a Second Embodiment of the present invention. FIG. 5 is a schematic diagram illustrating a conventional method of mounting the display function-equipped electronic device D in a vehicle.

FIG. 1 shows a state where the display function-equipped electronic device D is mounted on a rearview mirror R of a vehicle using the mount adapter 100 of the present invention. This drawing illustrates a state where the mount adapter 100 of the First Embodiment is used. The state using the mount adapter 200 of the Second Embodiment is the same. Note that in parentheses are reference numerals for members corresponding to those of the Second Embodiment. The display function-equipped electronic device D is provided on the vehicular rearview mirror R on the driver's seat side when viewed from the driver's seat as illustrated in the drawing. The display function-equipped electronic device D is abbreviated as "display device D" hereafter. The display device D may be a well-known display device such as a smart phone, etc. The display device D has an operation portion M deployed on the center side of the rearview mirror R and a display part F deployed so as to be on the opposite side therefrom. This allows a driver to easily see image information displayed on the display device D, and maintain a stable posture without the display device D moving when pressing a mechanical operation button, a touch SW, etc. of the operation portion M so as to operate it.

Moreover, the driver needs to confirm the state at the back of the vehicle via the rearview mirror. Approximately half of the rearview mirror R is covered by the display device D. Therefore, a convex mirror 160 (260) is provided on the portion of the rearview mirror R not covered by the display device D so that it is easier for the driver to confirm the backside.

FIG. 2 is a schematic diagram illustrating a method of mounting a display device D using a mount adapter 200 (100) of the present invention and also illustrating how to use it. This drawing illustrates a state where the mount adapter 200 of the Second Embodiment is used. The state where the mount adapter 100 of the First Embodiment is used is the same. Note that in parentheses are reference numerals for members corresponding to those of the First Embodiment. This drawing is a schematic diagram illustrating a positional relationship of a driver and the display device D mounted on the rearview mirror using the mount adapter of the present invention when seen from the upper part of the vehicle. As shown in this drawing, in the case of mounting the display device D on the rearview mirror R, the mount adapter of the present invention is provided with a wedged-shaped tapered part 230 (130) such that the display device D faces perpendicular to the traveling direction of the vehicle. The tapered mounting portion has a shape so as to be unobtrusive to photographing such that the vehicle front can be photographed by a camera C mounted on the display device D.

Furthermore, as in FIG. 1, since the driver needs to confirm the state at the back of the vehicle via the rearview mirror, the convex mirror 160 (260) is provided on the portion of the rearview mirror R not covered by the display device D.

If the mount adapter 100 (200) of the present invention is used to mount the display device D on the rearview mirror R, the above problem is resolved, and the display device D can be visually confirmed safely and has good operability.

Embodiments of the mount adapter 100 (200) of the present invention are described using FIGS. 3 and 4. Note that the mount adapter of the present invention is not limited to the embodiments described below, and includes all adapters that allow mounting of the display device D on the rearview mirror R.

### FIRST EMBODIMENT

The mount adapter 100 of this embodiment is described using FIG. 3. The mount adapter 100 includes a configuration that allows mounting of the display device D on the rearview mirror R. The display device D is not displayed as a matter of convenience of the drawing. The mount adapter 100 is provided with a mirror mount part (part inserted in the mirror) 110 for mounting on the rearview mirror R and a display device mount part 120 for mounting the display device D. The mount adapter 100 of the present invention can be easily molded from a material such as resin, etc. The mirror mount part 110 is hollow such that approximately half of the rearview mirror R can be inserted so that the mount adapter 110 can be mounted on the rearview mirror R. A fixing means may be provided so as to fix the mount adapter 100 to the rearview mirror R using a screw etc. once it is inserted therein. The display device mount part 120 is deployed such that the camera C on the display device D is exposed. This corresponds to the camera exposed portion in FIG. 3. Since the camera C is exposed from the mount adapter when the display device D is mounted on the mount adapter 100 in this manner, the scenery in front of the vehicle can be photographed by the camera of the display device D, and the driver can also view the same image. Moreover, the display device mount part 120 is provided on the tapered part 130. As a result, the mount adapter 100 inserted in the rearview mirror R allows the driver to view the display device D perpendicularly to the traveling direction of the vehicle. The display device mount part 120 includes an end part 140 and a flange part 150, wherein mounting is completed when the display device D is inserted until touching the end part 140. A fixing means for fixing the inserted display device D may be provided as needed. Alternatively, the display device D may be mounted on the rearview mirror that is already inserted in the mount adapter 100.

If the display device D is mounted on the rearview mirror R using the mount adapter 100 according to this embodiment in this manner, approximately half of the rearview mirror R will lose its own mirroring capability. Therefore, the convex mirror 160 is mounted on the portion of the rearview mirror R not covered by the display device D so as to make it easy for the driver to confirm the back the vehicle. The convex mirror 160 is a separate body from the mount adapter 100 in this embodiment. The convex mirror 160 may be mounted on the rearview mirror R using adhesive tape etc.

### SECOND EMBODIMENT

The mount adapter 200 of this embodiment is described using FIG. 4. FIG. 4 illustrates a state where the display device D is mounted on the mount adapter 200. In this embodiment, a convex mirror 260 and a display device mount part 220 allowing mounting of the display device D are unified as a single body. That mount adapter 200 is mounted on the rearview mirror R. Such mounting may employ adhering using adhesive tape etc. This mount adapter can be molded easily from a material such as resin etc., as in the First Embodiment. The display device mount part 220 must be large enough to receive the display device D. Moreover, the display device mount part 220 is provided on a tapered part 230. This allows the display device D to be perpendicular to the traveling direction of the vehicle with the mount adapter 200 being mounted on the rearview mirror R. Furthermore, when the display device D is mounted on the mount adapter, the camera C is exposed. As a result, the scenery in front of the vehicle can be photographed by the camera C of the display device D, and the driver can view that image. The display device mount part 220 includes an end part 240 and a flange part 250, wherein mounting is completed when the display device D is inserted until touching the end part 240. A fixing means for fixing the inserted display device D may be provided as needed.

Furthermore, as in the first Embodiment, the convex mirror 260 is provided on the opposite side than the display device mount part 220 on the mount adapter 200. This allows the driver to confirm the back of the vehicle easily.

The present invention is constituted such that the display device D is mounted on the rearview mirror R using the mount adapter 100 (200), as shown in the First Embodiment and the Second Embodiment. The case of arranging the display device D by a conventional method illustrated in FIG. 5 has problems such as difficulty in operation of the display device due to obstruction by the steering wheel when a driver is operating the display device D, as well as difficulty in safe driving of the vehicle since the driver must look down. Such problems are all resolved by the present invention.

### EXPLANATION OF REFERENCES

100: Mount adapter of the present invention (First Embodiment)
110: Mirror mount part
120: Display device mount part
130: Tapered part
140: End part
150: Flange part
160: Convex mirror
200: Mount adapter of the present invention (Second Embodiment)
220: Display device mount part
230: Tapered part
240: End part
250: Flange part
260: Convex mirror
D: display function-equipped electronic device (abbrev: display device)
F: Display part
M: Operation portion
R: Rearview mirror
C: Camera 900: Conventional mount adapter

## Claims

1. A mount adapter (100, 200) to be mounted on a vehicular rearview mirror, wherein a convex mirror (160, 260) is provided on the far side of a rearview mirror to a driver's seat side when viewed from the driver's seat, and a display function-equipped electronic device is mounted on the rearview mirror on a side near the driver's seat in such a manner as to cover the rearview mirror.

2. The mount adapter of Claim 1, comprising a mount part such that a flat part of the display function-equipped electronic device is perpendicular to the traveling direction of the vehicle.

3. The mount adapter of either Claim 1 or 2, wherein the mount adapter is deployed in a manner that a mechanical operation button and/or a touch operation portion of the display function-equipped electronic device is on the central side of the rearview mirror.

4. A mount adapter for the display function-equipped electronic device of Claim 1, wherein the convex mirror and the mount adapter are unified as a single body.

5. The mount adapter of Claim 4, comprising a mount part such that a flat part of the display function-equipped electronic device is perpendicular to the traveling direction of the vehicle.

6. The mount adapter of either Claim 4 or 5, wherein the mount adapter is deployed in a manner that a mechanical operation button or a touch operation portion of the display function-equipped electronic device is on the central side of the rearview mirror.

7. A method of mounting a display function-equipped electronic device on a vehicular rearview mirror using the mount adapter of any one of Claim 1 to Claim 6.

## Patentansprüche

1. Montageadapter (100, 200), der auf einem
Fahrzeugrückspiegel zu montieren ist, wobei ein konvexer Spiegel (160, 260) auf der abgewandten Seite eines Rückspiegels zu einer Fahrersitzseite bereitgestellt ist, wenn von dem Fahrersitz aus betrachtet, und
eine mit Anzeigefunktion versehene elektronische Vorrichtung auf dem Rückspiegel auf einer Seite nahe dem Fahrersitz in einer derartigen Weise montiert ist, dass sie den Rückspiegel abdeckt,

2. Montageadapter nach Anspruch 1, der ein Montageteil derart umfasst, dass ein flacher Teil der mit Anzeigefunktion versehenen elektronischen Vorrichtung senkrecht zu der Fahrtrichtung des Fahrzeugs ist.

3. Montageadapter nach entweder Anspruch 1 oder 2, wobei der Montageadapter in einer Weise eingesetzt ist, dass ein mechanischer Betätigungsknopf und/oder ein Berührungsbetätigungsabschnitt der mit Anzeigefunktion versehenen elektronischen Vorrichtung auf der mittleren Seite des Rückspiegels ist.

4. Montageadapter für die mit Anzeigefunktion versehene elektronische Vorrichtung nach Anspruch 1, wobei der konvexe Spiegel und der Montageadapter als ein einziger Körper vereinigt sind.

5. Montageadapter nach Anspruch 4, der ein Montageteil derart umfasst, dass ein flacher Teil der mit Anzeigefunktion versehenen elektronischen Vorrichtung senkrecht zu der Fahrtrichtung des Fahrzeugs ist.

6. Montageadapter nach entweder Anspruch 4 oder 5, wobei der Montageadapter in einer Weise eingesetzt ist, dass ein mechanischer Betätigungsknopf oder ein Berührungsbetätigungsabschnitt der mit Anzeigefunktion versehenen elektronischen Vorrichtung auf der mittleren Seite des Rückspiegels ist.

7. Verfahren zum Montieren einer mit Anzeigefunktion versehenen elektronischen Vorrichtung auf einem Fahrzeugrückspiegel unter Verwendung des Montageadapters nach einem der Ansprüche 1 oder 6.

## Revendications

1. Adaptateur de montage (100, 200) à monter sur un rétroviseur de véhicule, dans lequel un miroir convexe (160, 260) est placé du côté distal d'un rétroviseur par rapport au côté siège du conducteur, vu depuis le siège du conducteur, et
un dispositif électronique équipé d'une fonction d'affichage est monté sur le rétroviseur d'un côté proximal du siège du conducteur, de manière à recouvrir le rétroviseur.

2. Adaptateur de montage selon la revendication 1, comprenant une partie monture de façon qu'une partie plane du dispositif électronique équipé d'une fonction d'affichage soit perpendiculaire à la direction de déplacement du véhicule.

3. Adaptateur de montage selon l'une ou l'autre des revendications 1 et 2, dans lequel l'adaptateur de montage est déployé de manière qu'un bouton d'actionnement mécanique et/ou une partie d'actionnement tactile du dispositif électronique équipé d'une fonction d'affichage se situe(nt) du côté central du rétroviseur.

4. Adaptateur de montage destiné au dispositif électronique équipé d'une fonction d'affichage selon la revendication 1, dans lequel le miroir convexe et l'adaptateur de montage sont réunis en un seul corps.

5. Adaptateur de montage selon la revendication 4, comprenant une partie monture de façon qu'une partie plane du dispositif électronique équipé d'une fonction d'affichage soit perpendiculaire à la direction de déplacement du véhicule.

6. Adaptateur de montage selon l'une ou l'autre des revendications 4 et 5, dans lequel l'adaptateur de montage est déployé de manière qu'un bouton d'actionnement mécanique ou une partie d'actionnement tactile du dispositif électronique équipé d'une fonction d'affichage se situe du côté central du rétroviseur.

7. Procédé de montage d'un dispositif électronique équipé d'une fonction d'affichage sur un rétroviseur de véhicule à l'aide de l'adaptateur de montage selon l'une quelconque des revendications 1 à 6.
